# EUROPEAN PATENT SPECIFICATION

(11) **EP 4 470 895 B1**
(45) Date of publication and mention of the grant of the patent: **18.06.2025**
(21) Application number: 23220507.0
(22) Date of filing: 28.12.2023
(51) Int. Cl.: B62K 23/08, B62M 25/06

(54) **STRADDLED VEHICLE**
GRÄTSCHSITZFAHRZEUG
VÉHICULE À SELLE

(30) Priority: 02.06.2023 JP 2023091565
(43) Date of publication of application: 04.12.2024
(73) Proprietor: Yamaha Hatsudoki Kabushiki Kaisha, Iwata-shi, Shizuoka 438-8501 (JP)
(72) Inventor: INOUE, Yuichi, Iwata-shi, 4388501 (JP)
(74) Representative: Studio Torta S.p.A.

(56) References cited:
- JP-U- S50 137 750
- US-B2- 7 568 403

## Description

### Technical field

The present invention relates to a straddled vehicle.

### Prior art

Some straddled vehicles are equipped with a shift pedal. The shift pedal is rotatably attached to the straddled vehicle. A rider changes gears in the transmission by operating the shift pedal with his or her foot. For example, the rider shifts up a gear by pushing up the shift pedal with his or her foot from below. The rider downshifts the gear by pressing down on the shift pedal with his or her foot from above.

For example, as disclosed in International Publication No. WO 2006/011441, the shift pedal includes a pedal tread portion and a cover. The pedal tread portion projects to the side of the vehicle and has a cylindrical shape. The cover is made of rubber and is attached to cover the pedal tread portion. The cover has a cylindrical shape. The tip of the pedal tread portion projects outward from the cover and has a larger diameter than the other part of the pedal tread portion. Therefore, by locking the tip of the pedal tread portion to the cover, the cover is prevented from coming off from the pedal tread portion. Description of the invention

In the shift pedal described above, the tip of the pedal tread portion has a larger diameter than the hole of the cover, so that the cover is prevented from slipping off from the pedal tread portion. However, since the tip of the pedal tread portion has a larger diameter than the hole of the cover, it is not easy to attach the cover to the pedal tread portion. An object of the present invention is to firmly prevent a cover made of an elastic material from coming off a shift pedal, and to facilitate attachment of the cover to the shift pedal.JP-U-S50137750 discloses a straddled vehicle according to the preamble of claim 1.

A straddled vehicle according to one aspect of the present invention includes a vehicle body and a shift pedal. The shift pedal is attached to the vehicle body. The shift pedal includes a shaft portion, an arm portion, a pedal tread portion, and a cover. The shaft portion is rotatably supported by the vehicle body. The arm portion extends in a front-rear direction of the vehicle from the shaft portion. The pedal tread portion projects laterally from the arm portion. The cover is made of an elastic material and covers the pedal tread portion. The pedal tread portion includes an inner lateral portion, an outer lateral portion, and a first notch. The inner lateral portion is connected to the arm portion. The outer lateral portion is arranged further laterally outward than the inner lateral portion. The first notch is located between the inner lateral portion and the outer lateral portion. The outer lateral portion has a same width as the inner lateral portion in the front-rear direction of the vehicle. The cover includes a hole and a first protrusion. The pedal tread portion is inserted into the hole. The first protrusion protrudes from the inner surface of the hole. The first protrusion engages with the first notch within the hole, so that the cover is prevented from coming off from the pedal tread portion.

In the straddled vehicle according to the present aspect, the cover is prevented from coming off from the pedal tread portion by the first protrusion engaging the first notch in the hole. Therefore, the cover made of an elastic material is firmly prevented from coming off from the pedal tread portion, and the cover can be easily attached to the pedal tread portion.

The outer lateral portion of the pedal tread portion may include a pedal end. The pedal end may be located at the outermost lateral side in the pedal tread portion. The cover may include a cover end. The cover end may be located at the outermost lateral side in the cover. The pedal end may be flush with the cover end or may be arranged further laterally inward than the cover end. In this case, the pedal end is arranged flush with the cover end or further laterally inward than the cover end. Therefore, a rider's foot is less likely to hit the pedal end and thereby the operability is improved.

The pedal tread portion may have a plate shape. In this case, compared to the case where the pedal tread portion is cylindrical, the resistance during insertion of the pedal tread portion becomes smaller and the installation becomes easier.

The pedal tread portion may include a first edge, a second edge, and a second notch. The first edge may extend in a left-right direction of the vehicle. The second edge may extend in the left-right direction of the vehicle and be arranged on the opposite side of the first edge. The second notch may be located between the inner lateral portion and the outer lateral portion. The cover may include a second protrusion protruding from the inner surface of the hole. The cover may be prevented from coming off from the pedal tread portion by the second protrusion being engaged with the second notch in the hole. The first notch may be provided at the first edge. The second notch may be provided at the second edge. In this case, since the two protrusions are respectively engaged with the notches, the effect of preventing slippage is improved.

The outer lateral portion and the inner lateral portion may have a maximum width at the pedal tread portion in the front-rear direction of the vehicle. In this case, the resistance during insertion of the pedal tread portion becomes smaller compared to the case where a large-diameter portion for preventing the pedal tread portion from coming off is provided at the outer end of the pedal tread portion. This makes attachment of the cover even easier.

The first notch may be located laterally outside a center of the pedal tread portion in the left-right direction of the vehicle. In this case, when the pedal tread portion is inserted into the hole of the cover to a certain extent, the first protrusion is engaged with the first notch. Therefore, it is easy to push the pedal tread portion into the cover.

The first notch may have a curved shape. In this case, the first protrusion easily enters the first notch. This makes attachment of the cover even easier.

### Brief description of the drawings

FIG. 1 is a side view of a straddled vehicle according to an embodiment.
FIG. 2 is a perspective view of a shift pedal.
FIG. 3 is a top view of the shift pedal.
FIG. 4 is a side view of the shift pedal.
FIG. 5 is a perspective view of the pedal body.
FIG. 6 is an enlarged view of the pedal body showing a vicinity of the pedal tread portion.
FIG. 7 is an enlarged view of the pedal body showing the vicinity of the pedal tread portion.
FIG. 8 is an enlarged view of the pedal body showing the vicinity of the pedal tread portion.
FIG. 9 is an enlarged view of the shift pedal showing a cover and the vicinity of the pedal tread portion.
FIG. 10 is a perspective view of the cover.
FIG. 11 is a side view of the shift pedal showing a definition of an operating direction of the shift pedal.
FIG. 12 is a sectional view taken along line XII-XII of the shift pedal in FIG. 9.
FIG. 13 is a sectional view of a shift pedal according to a first modification.
FIG. 14 is an enlarged view of a pedal body showing a vicinity of a pedal tread portion according to a second modification.
FIG. 15 is an enlarged view of the shift pedal showing the vicinity of the pedal tread portion according to the second modification.

### Embodiments of the invention

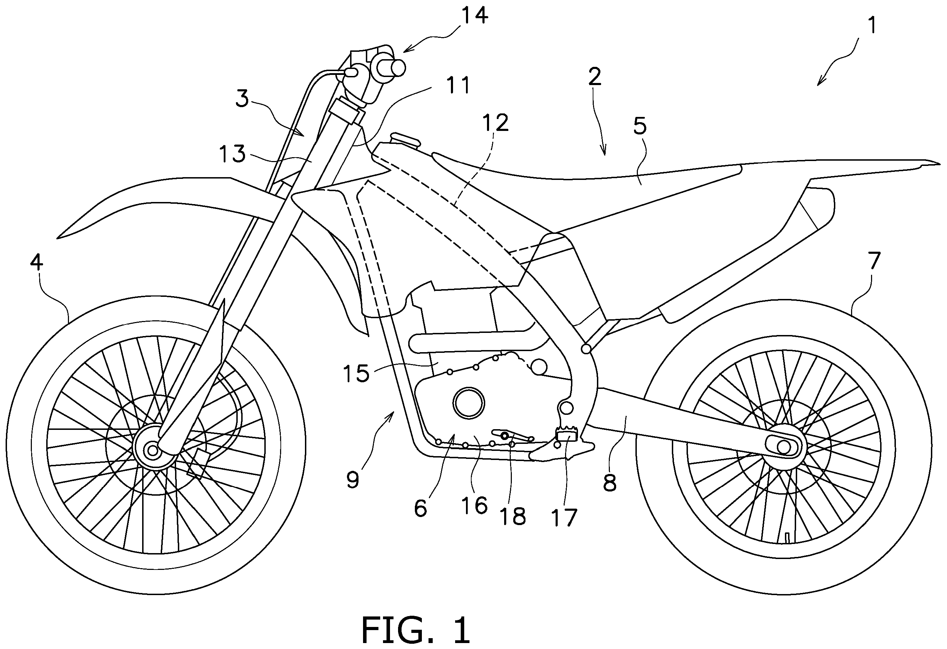

Hereinafter, a straddled vehicle according to an embodiment will be described with reference to the drawings. FIG. 1 is a side view of a straddled vehicle 1 according to an embodiment. The straddled vehicle 1 is a so-called off-road type motorcycle. As shown in FIG. 1, the straddled vehicle 1 includes a vehicle body 2. The vehicle body 2 includes a steering device 3, a front wheel 4, a seat 5, a power unit 6, a rear wheel 7, a swing arm 8, and a vehicle body frame 9. In the present embodiment, the front, rear, left, and right directions refer to the front, rear, left, and right directions as viewed from a rider seated on the seat 5.

The vehicle body frame 9 includes a head pipe 11 and a main frame 12. The head pipe 11 extends forward and downward. The main frame 12 is connected to the head pipe 11.

The steering device 3 is rotatably supported by the head pipe 11. The steering device 3 is configured to be steered by a rider. The steering device 3 includes a front fork 13 and a handle member 14. The front fork 13 rotatably supports the front wheel 4. The front fork 13 is rotatably supported by the head pipe 11. The handle member 14 is connected to the front fork 13. The handle member 14 is operable left and right by a rider.

The seat 5 is arranged behind the head pipe 11. The seat 5 is supported by the vehicle body frame 9. The power unit 6 is arranged below the seat 5. The power unit 6 is supported by the main frame 12. The power unit 6 generates driving force to rotate the rear wheel 7. The power unit 6 includes an engine 15 and a transmission 16.

The rear wheel 7 is arranged behind the power unit 6. The rear wheel 7 is connected to the main frame 12 via the swing arm 8. The swing arm 8 is swingably supported by the main frame 12. The rear wheel 7 is rotatably supported by the swing arm 8.

A foot step 17 and a shift pedal 18 are arranged below the seat 5. The foot step 17 is arranged behind the shift pedal 18. A rider's foot is placed on the foot step 17. The foot step 17 is connected to the main frame 12. The foot step 17 projects laterally from the main frame 12.

The shift pedal 18 is rotatably attached to the vehicle body 2. The shift pedal 18 is attached to the transmission 16, for example. Note that the shift pedal 18 is not limited to be attached to the transmission 16, and may be attached to other parts such as the vehicle body frame 9. The shift pedal 18 is operated by a rider's foot. By operating the shift pedal 18, the gear of the transmission 16 is changed.

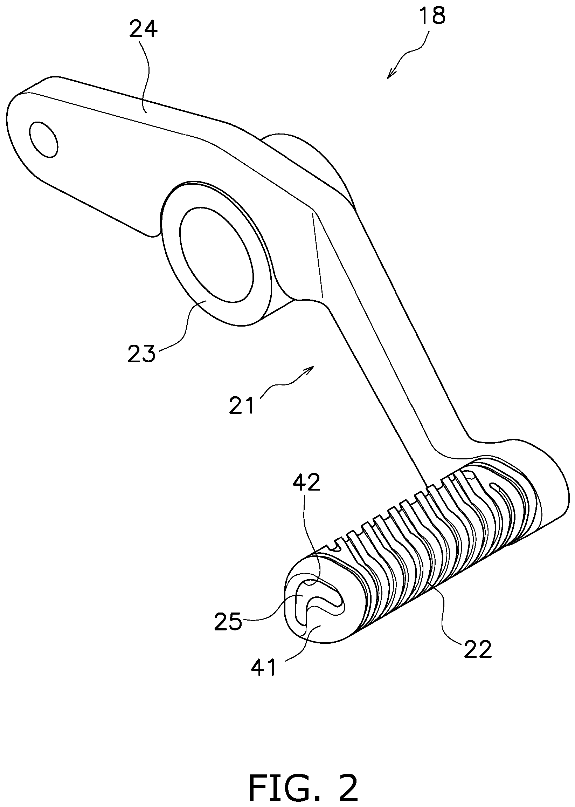

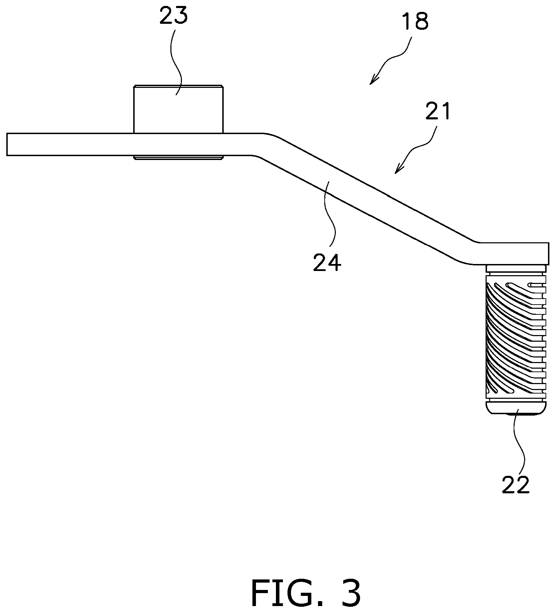

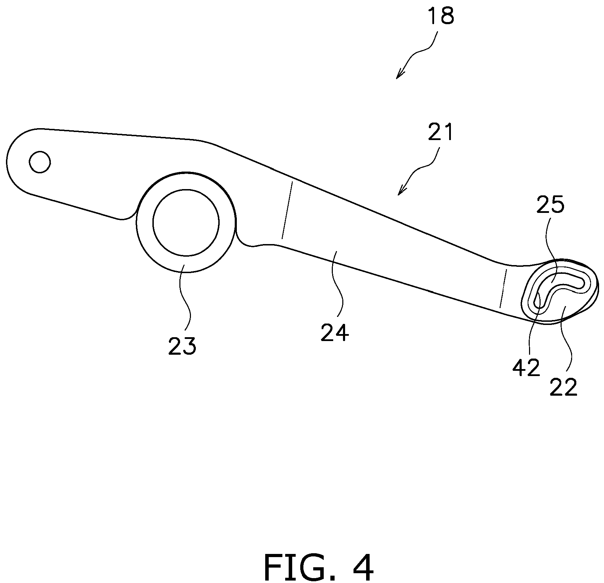

FIG. 2 is a perspective view of the shift pedal 18. FIG. 3 is a top view of the shift pedal 18. FIG. 4 is a side view of the shift pedal 18. As shown in FIGS. 2 to 4, the shift pedal 18 includes a pedal body 21 and a cover 22. The pedal body 21 is rotatably attached to the vehicle body 2. The pedal body 21 is made of metal such as aluminum.

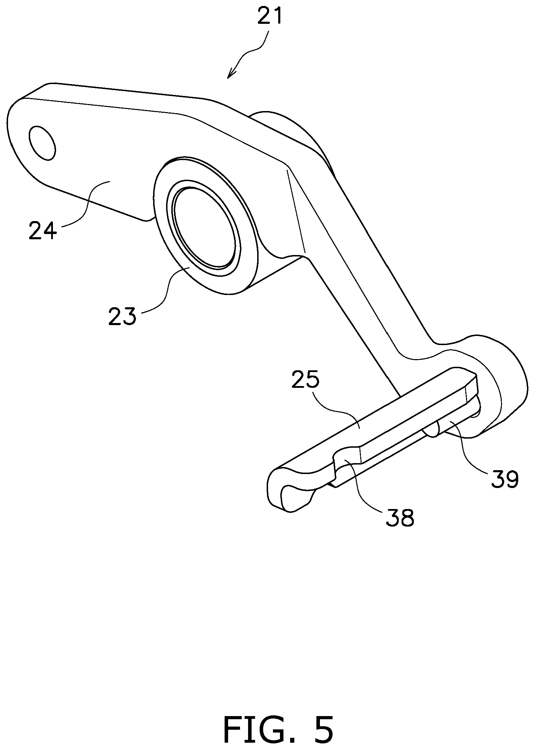

FIG. 5 is a perspective view of the pedal body 21. As shown in FIG. 5, the pedal body 21 includes a shaft portion 23, an arm portion 24, and a pedal tread portion 25. The shaft portion 23 is rotatably supported by the vehicle body 2. The shaft portion 23 projects laterally from the arm portion 24. The arm portion 24 has a plate shape. The arm portion 24 extends from the shaft portion 23 in the front-rear direction.

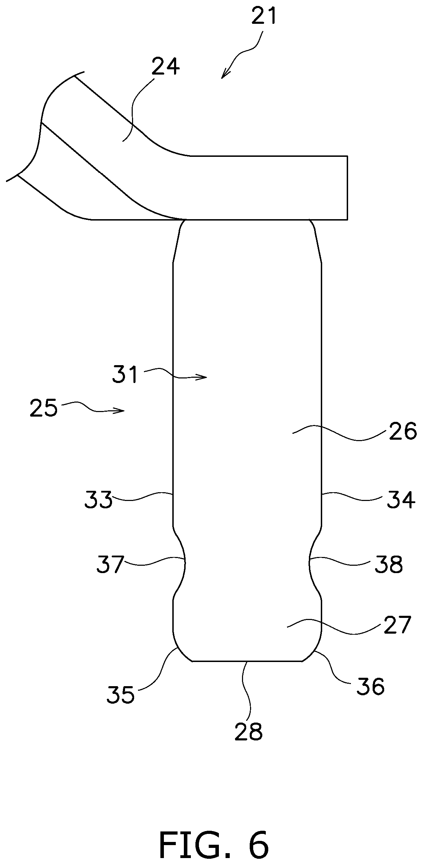

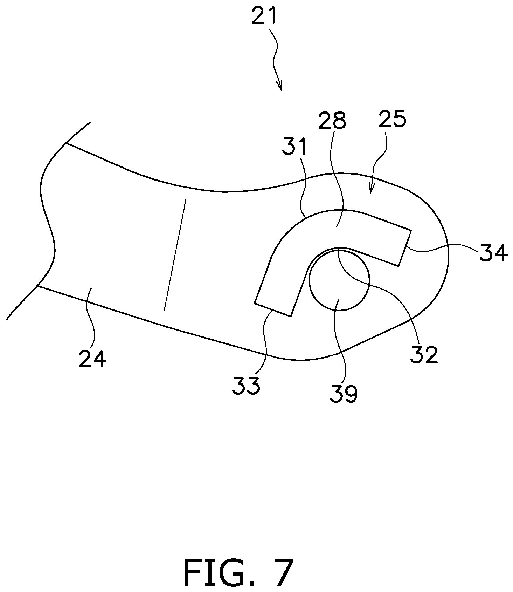

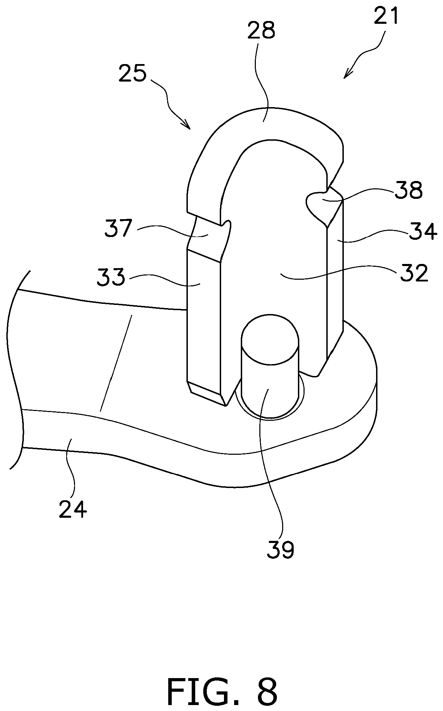

FIGS. 6 to 8 are enlarged views of the pedal body 21 showing the vicinity of the pedal tread portion 25. As shown in FIGS. 6 to 8, the pedal tread portion 25 projects laterally from the arm portion 24. The pedal tread portion 25 is made of sheet metal. The pedal tread portion 25 is connected to the arm portion 24 by, for example, welding. The pedal tread portion 25 has a plate shape that is bent convexly upward.

As shown in FIG. 6, the pedal tread portion 25 includes an inner lateral portion 26 and an outer lateral portion 27. The inner lateral portion 26 is connected to the arm portion 24. The outer lateral portion 27 is arranged further laterally outward than the inner lateral portion 26. The outer lateral portion 27 of the pedal tread portion 25 includes a pedal end 28. The pedal end 28 is located at the outermost lateral side of the pedal tread portion 25. The outer lateral portion 27 has the same width as the inner lateral portion 26 in the front-rear direction of the vehicle. The outer lateral portion 27 and the inner lateral portion 26 have a maximum width in the pedal tread portion 25 in the front-rear direction of the vehicle.

The pedal tread portion 25 includes an upper surface 31, a bottom surface 32, a first edge 33, and a second edge 34. The upper surface 31 has a curved shape convexly upward. The bottom surface 32 has a curved shape concave upward. The first edge 33 and the second edge 34 extend in the left-right direction of the vehicle. The first edge 33 and the second edge 34 extend linearly. The second edge 34 is located opposite the first edge 33. The first edge 33 is located on the front side of the pedal tread portion 25, and the second edge 34 is located on the rear side of the pedal tread portion 25. As shown in FIG. 6, the corner 35 between the first edge 33 and the pedal end 28 is rounded. The corner 36 between the second edge 34 and the pedal end 28 is rounded.

The pedal tread portion 25 includes a first notch 37 and a second notch 38. The first notch 37 is provided in the first edge 33. The first notch 37 has a shape recessed rearward from the first edge 33. The first notch 37 is arranged facing forward. The second notch 38 is provided in the second edge 34. The second notch 38 has a shape recessed forward from the second edge 34. The second notch 38 is arranged facing rearward.

The first notch 37 and the second notch 38 are arranged between the inner lateral portion 26 and the outer lateral portion 27. The first notch 37 and the second notch 38 are arranged side by side in the front-rear direction of the vehicle. The first notch 37 and the second notch 38 are arranged on the outer lateral side of the center of the pedal tread portion 25 in the left-right direction of the vehicle. The first notch 37 and the second notch 38 have a smoothly curved shape.

The pedal body 21 includes a reinforcing member 39. The reinforcing member 39 projects laterally from the arm portion 24. The reinforcing member 39 has a cylindrical shape. The reinforcing member 39 is connected to the arm portion 24 by, for example, welding. The reinforcing member 39 is arranged below the pedal tread portion 25. The reinforcing member 39 is in contact with the bottom surface 32 of the pedal tread portion 25. The reinforcing member 39 supports the pedal tread portion 25 from below.

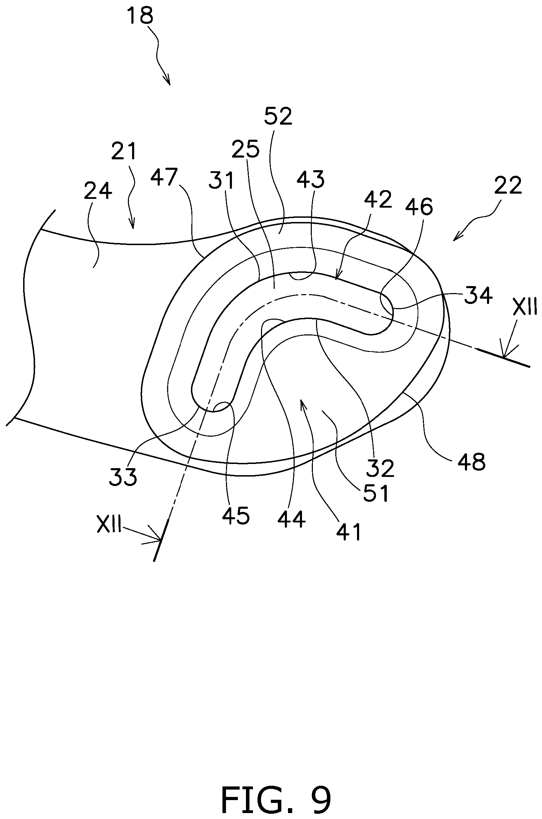

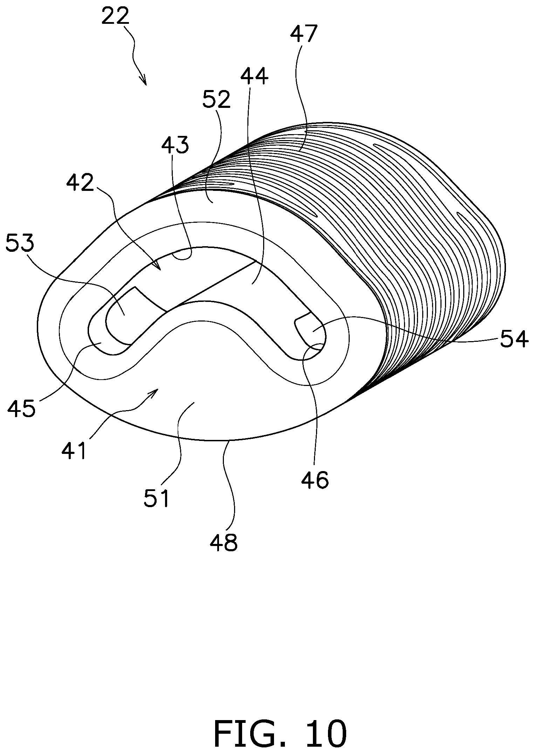

The cover 22 is separate from the pedal body 21. The cover 22 is attached to the pedal body 21. The cover 22 is made of an elastic material such as rubber. The cover 22 covers the pedal tread portion 25. FIG. 9 is an enlarged view of the shift pedal 18 showing the cover 22 and the vicinity of the pedal tread portion 25. FIG. 10 is a perspective view of the cover 22. As shown in FIGS. 9 and 10, the cover 22 has a flattened shape that is longer in the front-rear direction than in the vertical direction.

The cover 22 includes a cover end 41 and a hole 42. The cover end 41 is located at the outermost lateral side of the cover 22. The hole 42 extends in the left-right direction. The hole 42 penetrates the cover 22 in the left-right direction. The hole 42 is open at the cover end 41. Similar to the pedal tread portion 25, the hole 42 has a bent shape convexly upward.

The hole 42 includes an upper inner surface 43, a lower inner surface 44, a front inner surface 45, and a rear inner surface 46. The upper inner surface 43 is curved convexly upward. The lower inner surface 44 is curved convexly upward. The hole 42 extends in a curved line from the front inner surface 45 toward the rear inner surface 46. The pedal tread portion 25 is inserted into the hole 42. The pedal tread portion 25 is press-fitted into the hole 42. Thereby, the cover 22 is attached to the pedal body 21. The upper surface 31 of the pedal tread portion 25 contacts the upper inner surface 43. The bottom surface 32 of the pedal tread portion 25 contacts the lower inner surface 44. The first edge 33 of the pedal tread portion 25 contacts the front inner surface 45. The second edge 34 contacts the rear inner surface 46.

The cover 22 includes an upper curved surface 47 and a lower curved surface 48. The upper curved surface 47 is provided on the upper surface of the cover 22. The upper curved surface 47 is curved convexly upward. The lower curved surface 48 is provided on the lower surface of the cover 22. The lower curved surface 48 is curved convexly downward. The upper curved surface 47 and the lower curved surface 48 are provided with anti-slip grooves. The curvature of the lower curved surface 48 is greater than the curvature of the upper curved surface 47.

The cover 22 includes a lower cover portion 51 and an upper cover portion 52. The lower cover portion 51 is located below the pedal tread portion 25. The lower cover portion 51 is arranged facing the bottom surface 32 of the pedal tread portion 25. The upper cover portion 52 is located above the pedal tread portion 25. The upper cover portion 52 is arranged facing the upper surface 31 of the pedal tread portion 25. The thickness of the lower cover portion 51 in the vertical direction is greater than the thickness of the upper cover portion 52 in the vertical direction.

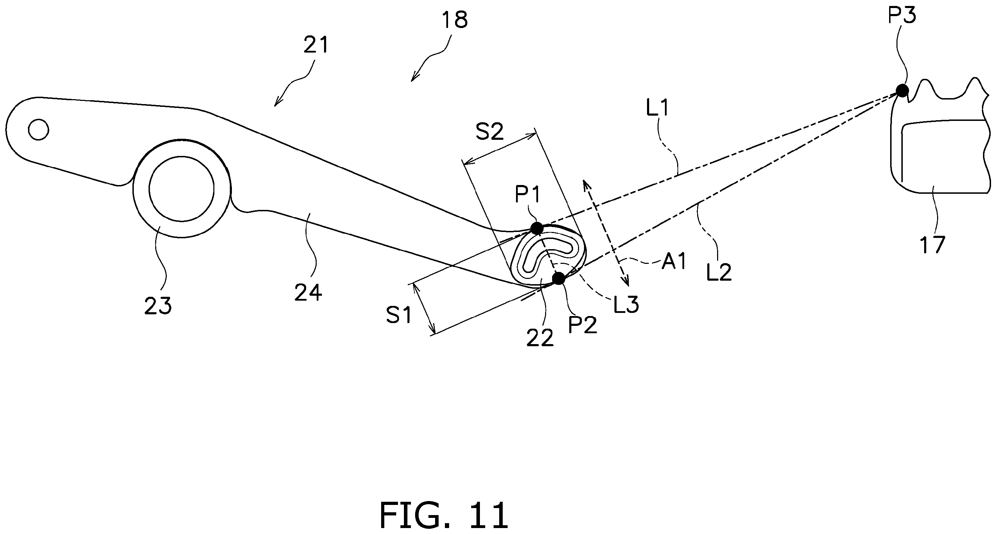

As shown in FIG. 11, a contact point between a first tangent line L1 and the cover 22 is defined as an upper contact point P1 as seen in the vehicle side view. The first tangent line L1 passes through a predetermined position P3 on the foot step 17 and contacts the cover 22 from above. The predetermined position P3 is, for example, the front end of the upper surface of the foot step 17. Alternatively, the predetermined position P3 may be any other position on the upper surface of the foot step 17. As seen in the vehicle side view, a contact point between a second tangent line L2 and the cover 22 is defined as a lower contact point P2. The second tangent line L2 passes through the predetermined position P3 on the foot step 17 and contacts the cover 22 from below. As seen in the vehicle side view, a direction in which a straight line L3 connecting the upper contact point P1 and the lower contact point P2 extends is defined as an operating direction A1 of a rider's foot. As shown in FIG. 11, as seen in the vehicle side view, a dimension S1 of the cover 22 in the operating directionA1 is smaller than a dimension S2 of the cover 22 in a direction perpendicular to the operating directionA1.

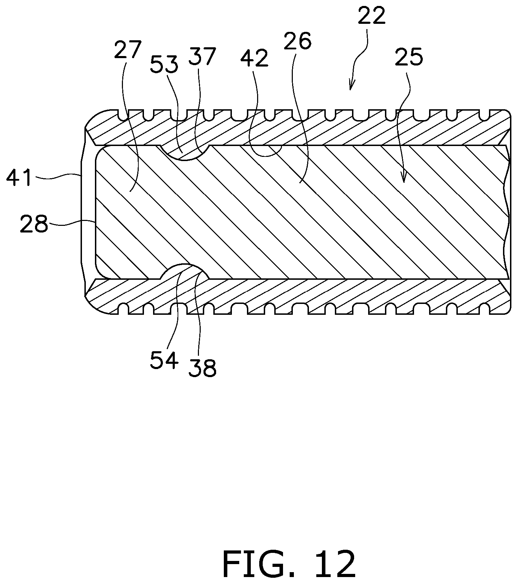

FIG. 12 is a sectional view taken along the line XII-XII of the shift pedal 18 in FIG. 9. As shown in FIG. 12, the pedal tread portion 25 is arranged within the hole 42. The pedal end 28 is arranged further laterally inward than the cover end 41. The cover 22 includes a first protrusion 53 and a second protrusion 54. The first protrusion 53 and the second protrusion 54 protrude from the inner surface of the hole 42. The first protrusion 53 protrudes from the front inner surface 45. The first protrusion 53 is engaged with the first notch 37 within the hole 42. The second protrusion 54 protrudes from the rear inner surface 46. The second protrusion 54 is engaged with the second notch 38 within the hole 42. Thereby, the cover 22 is prevented from coming off from the pedal tread portion 25.

According to the straddled vehicle 1 according to the present embodiment, the first protrusion53 engages with the first notch 37 in the hole 42, so that the cover 22 is prevented from coming off with respect to the pedal tread portion 25. Therefore, the cover 22 made of an elastic material is firmly prevented from coming off from the pedal tread portion 25, and the cover 22 can be easily attached to the pedal tread portion 25.

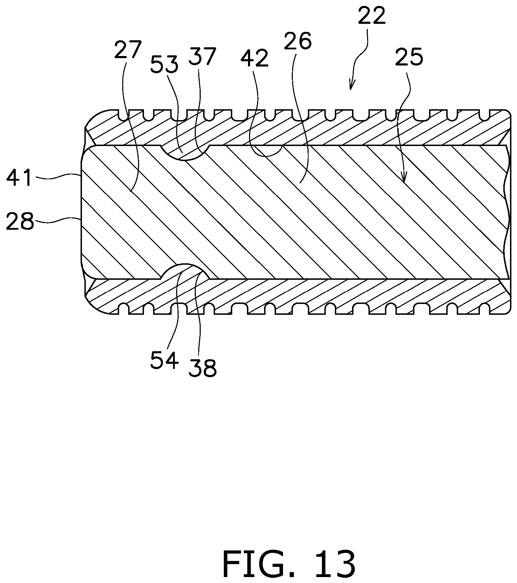

The straddled vehicle 1 is not limited to an off-road type, but may be another type of vehicle such as a street type or a moped. The shape of the shift pedal 18 is not limited to that of the embodiment described above, and may be changed. FIG. 13 is a sectional view of a shift pedal 18 according to a first modification. As shown in FIG. 13, the pedal end 28 may be disposed flush with the cover end 41.

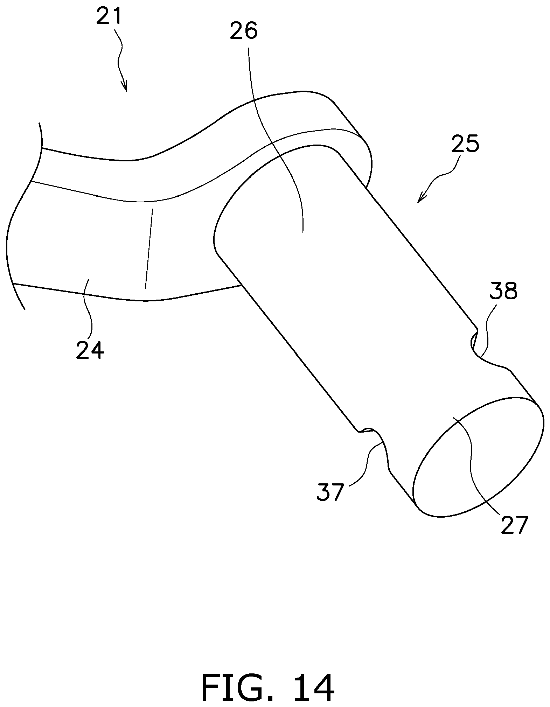

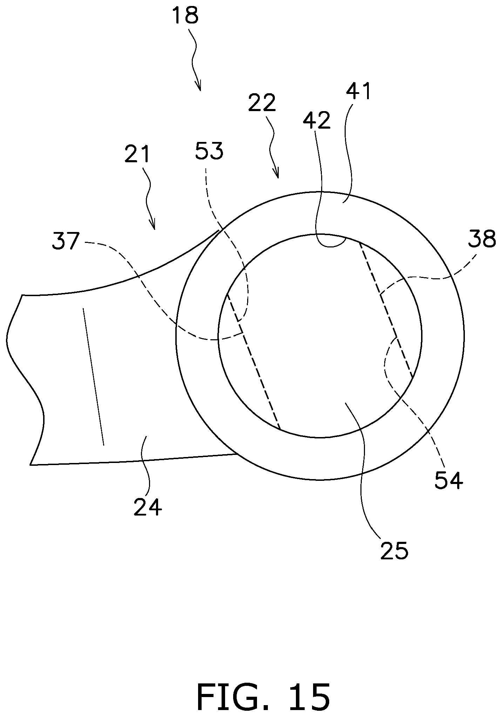

The shape of the pedal tread portion 25 is not limited to that of the above embodiment, and may be changed. The shape of the cover 22 is not limited to that of the above embodiment, and may be changed. For example, FIG. 14 is an enlarged view of the pedal body 21 showing the vicinity of the pedal tread portion 25 according to the second modification. FIG. 15 is an enlarged view of the shift pedal 18 showing the vicinity of the pedal tread portion 25 according to the second modification. As shown in FIGS. 14 and 15, the pedal tread portion 25 may have a cylindrical shape. The cover 22 may have a cylindrical shape.

### REFERENCE SIGNS LIST

2: Vehicle body, 18: Shift pedal, 22: Cover, 23: Shaft portion, 24: Arm portion, 25: Pedal tread portion, 26: Inner lateral portion, 27: Outer lateral portion, 28: Pedal end, 33: First edge, 34: Second edge, 37: First notch, 38: Second notch, 41: Cover end, 42: Hole, 53: First protrusion, 54: Second protrusion

## Claims

1. A straddled vehicle (1) comprising:
a vehicle body (2); and
a shift pedal (18) attached to the vehicle body (2), wherein
the shift pedal (18) includes:
a shaft portion (23) rotatably supported by the vehicle body (2),
an arm portion (24) extending in a front-rear direction of the vehicle from the shaft portion (23),
a pedal tread portion (25) projecting laterally from the arm portion (24), and
a cover (22) that is made of an elastic material and covers the pedal tread portion (25),
the pedal tread portion (25) including:
an inner lateral portion (26) connected to the arm portion (24),
an outer lateral portion (27) disposed further laterally outward than the inner lateral portion (26), and
a first notch (37) disposed between the inner lateral portion (26) and the outer lateral portion (27),
the outer lateral portion (27) has a same width as the inner lateral portion (26) in the front-rear direction of the vehicle (1),
the cover (22) including:
a hole (42) into which the pedal tread portion (25) is inserted, and
a first protrusion (53) protruding from an inner surface of the hole (42), and
the first protrusion (53) beings engaged with the first notch (37) in the hole (42) so that the cover (22) is prevented from coming off from the pedal tread portion (25);
wherein
the pedal tread portion (25) has a plate shape;
wherein off the pedal tread portion (25) includes:
a first edge (33) extending in a left-right direction of the vehicle (1),
a second edge (34) extending in the left-right direction of the vehicle (1) and arranged on an opposite side of the first edge (33), and
a second notch (38) arranged between the inner lateral portion (26) and the outer lateral portion (27),
the cover (22) includes a second protrusion (54) protruding from the inner surface of the hole (42),
the second protrusion (54) is engaged with the second notch (38) in the hole (42) so that the cover (22) is prevented from coming off from the pedal tread portion (25),
the first notch (37) is provided in the first edge (33), and **characterized in that**
the second notch (38) is provided in the second edge (34).

2. The straddled vehicle according to claim 1, wherein
the outer lateral portion (27) includes a pedal end (28) located at an outermost lateral side in the pedal tread portion (25),
the cover (22) includes a cover end (41) located at an outermost lateral side in the cover (22), and
the pedal end (28) is flush with the cover end (41), or is arranged further laterally inward than the cover end (41).

3. The straddled vehicle according to any one of claims 1 or 2, wherein the outer lateral portion (27) and the inner lateral portion (26) have a maximum width at the pedal tread portion (25) in the front-rear direction of the vehicle (1).

4. The straddled vehicle according to any one of the foregoing claims, wherein
the first notch (37) is arranged on an outer lateral side of a center of the pedal tread portion (25) in the left-right direction of the vehicle (1).

5. The straddled vehicle according to any one of the foregoing claims, wherein
the first notch (37) has a curved shape.

## Patentansprüche

1. Spreizsitz-Fahrzeug (1), das umfasst:
eine Fahrzeug-Karosserie (2); sowie
ein Schaltpedal (18), das an der Fahrzeug-Karosserie (2) angebracht ist, wobei das Schaltpedal (18) enthält:
einen Wellenabschnitt (23), der über die Fahrzeug-Karosserie (2) drehbar gelagert ist,
einen Armabschnitt (24), der sich in einer Längsrichtung des Fahrzeugs von dem Wellenabschnitt (23) aus erstreckt,
einen Pedal-Trittabschnitt (25), der sich seitlich von dem Armabschnitt (24) aus erstreckt, sowie
eine Verkleidung (22), die aus einem elastischen Material besteht und den Pedal-Trittabschnitt (25) abdeckt,
wobei der Pedal-Trittabschnitt (25) einschließt:
einen inneren seitlichen Abschnitt (26), der mit dem Armabschnitt (24) verbunden ist,
einen äußeren seitlichen Abschnitt (27), der seitlich weiter außen angeordnet ist als der innere seitliche Abschnitt (26) sowie
eine erste Einkerbung (37), die zwischen dem inneren seitlichen Abschnitt (26) und dem äußeren seitlichen Abschnitt (27) angeordnet ist,
wobei der äußere seitliche Abschnitt (27) die gleiche Breite hat wie der innere seitliche Abschnitt (26) in der Längsrichtung des Fahrzeugs (1) und
die Verkleidung (22) enthält:
ein Loch (42), in das der Pedal-Trittabschnitt (25) eingeführt ist, sowie
einen ersten Vorsprung (35), der von einer Innenfläche des Lochs (42) vorsteht, und
wobei der erste Vorsprung (53) mit der ersten Einkerbung (37) in dem Loch (42) so in Eingriff ist, dass verhindert wird, dass sich die Verkleidung (22) von dem Pedal-Trittabschnitt (25) löst;
wobei
der Pedal-Trittabschnitt (25) eine Plattenform hat;
und der Pedal-Trittabschnitt (25) einschließt:
eine erste Kante (33), die sich in einer Querrichtung des Fahrzeugs (1) erstreckt,
eine zweite Kante (34), die sich in der Querrichtung des Fahrzeugs (1) erstreckt und an einer der ersten Kante (33) gegenüberliegenden Seite angeordnet ist, sowie
eine zweite Einkerbung (38), die zwischen dem inneren seitlichen Abschnitt (26) und dem äußeren seitlichen Abschnitt (27) angeordnet ist,
wobei die Verkleidung (22) einen zweiten Vorsprung (54) enthält, der von der Innenfläche des Lochs (42) vorsteht,
der zweite Vorsprung (54) mit der zweiten Einkerbung (38) in dem Loch (42) so in Eingriff ist, dass verhindert wird, dass sich die Verkleidung (22) von dem Pedal-Trittabschnitt (25) löst,
die erste Einkerbung (37) in der ersten Kante (33) vorhanden ist, und **dadurch gekennzeichnet, dass**
die zweite Einkerbung (38) in der zweiten Kante (34) vorhanden ist.

2. Spreizsitz-Fahrzeug nach Anspruch 1, wobei
der äußere seitliche Abschnitt (27) ein Pedal-Ende (28) einschließt, das sich an einer äußersten Seite in dem Pedal-Trittabschnitt (25) befindet,
die Verkleidung (22) ein Verkleidungs-Ende (41) einschließt, das sich an einer äußersten Seite in der Verkleidung (22) befindet, und
das Pedal-Ende (28) bündig mit dem Verkleidungs-Ende (41) ist oder weiter seitlich innen angeordnet ist als das Verkleidungs-Ende (41).

3. Spreizsitz-Fahrzeug nach einem der Ansprüche 1 oder 2, wobei
der äußere seitliche Abschnitt (27) und der innere seitliche Abschnitt (26) eine maximale Breite an dem Pedal-Trittabschnitt (25) in der Längsrichtung des Fahrzeugs (1) haben.

4. Spreizsitz-Fahrzeug nach einem der vorangehenden Ansprüche, wobei
die erste Einkerbung (37) an einer äußeren Seite einer Mitte des Pedal-Trittabschnitts (25) in der Querrichtung des Fahrzeugs (1) angeordnet ist.

5. Spreizsitz-Fahrzeug nach einem der vorangehenden Ansprüche, wobei
die erste Einkerbung (37) eine gekrümmte Form hat.

## Revendications

1. Véhicule à selle (1) comprenant :
un cadre de véhicule (2) ; et
une pédale de changement de vitesse (18) rattachée au corps de véhicule (2), dans lequel
la pédale de changement de vitesse (18) inclut :
une partie d'arbre (23) soutenue en rotation par le cadre de véhicule (2),
une partie de bras (24) s'étendant dans une direction avant-arrière du véhicule depuis la partie d'arbre (23),
une partie de repose-pied de pédale (25) se projetant latéralement depuis la partie de bras (24), et
un capot (22) qui est fait d'un matériau élastique et couvre la partie de repose-pied de pédale (25),
la partie de repose-pied de pédale (25) incluant :
une partie latérale intérieure (26) connectée à la partie de bras (24),
une partie latérale extérieure (27) disposée plus latéralement vers l'extérieur que la partie latérale intérieure (26), et
une première encoche (37) disposée entre la partie latérale intérieure (26) et la partie latérale extérieure (27),
la partie latérale extérieure (27) présente une même largeur que la partie latérale intérieure (26) dans la direction avant-arrière du véhicule (1),
le capot (22) incluant :
un trou (42) dans lequel la partie de repose-pied de pédale (25) est insérée, et
un premier débordement (53) débordant depuis une surface intérieure du trou (42), et
le premier débordement (53) étant en contact avec la première encoche (37) dans le trou (42) de sorte que le capot (22) est empêché de se retirer de la partie de repose-pied de pédale (25) ;
dans lequel
la partie de repose-pied de pédale (25) présente une forme de plaque ;
dans lequel la partie de repose-pied de pédale (25) inclut :
une première arête (33) s'étendant dans une direction gauche-droite du véhicule (1),
une deuxième arête (34) s'étendant dans la direction gauche-droite du véhicule (1) et disposée sur un côté opposé de la première arête (33), et
une deuxième encoche (38) disposée entre la partie latérale intérieure (26) et la partie latérale extérieure (27),
le capot (22) inclut un deuxième débordement (54) débordant de la surface intérieure du trou (42),
le deuxième débordement (54) est en contact avec la deuxième encoche (38) dans le trou (42) de sorte que le capot (22) est empêché de se retirer de la partie de repose-pied de pédale (25),
la première encoche (37) est disposée dans la première arête (33), et **caractérisé en ce que** la deuxième encoche (38) est disposée dans la deuxième arête (34).

2. Le véhicule à selle selon la revendication 1, dans lequel
la partie latérale extérieure (27) inclut une extrémité de pédale (28) placée sur un côté latéral le plus à l'extérieur dans la partie de repose-pied de pédale (25),
le capot (22) inclut une extrémité de capot (41) placée sur un côté latéral le plus à l'extérieur dans le capot (22), et
l'extrémité de pédale (28) est affleurante à l'extrémité de capot (41), ou est disposée plus latéralement vers l'intérieur que l'extrémité de capot (41).

3. Le véhicule à selle selon l'une quelconque des revendications 1 à 2, dans lequel
la partie latérale extérieure (27) et la partie latérale intérieure (26) présentent une largeur maximale au niveau de la partie de repose-pied de pédale (25) dans la direction avant-arrière du véhicule (1).

4. Le véhicule à selle selon l'une quelconque des revendications précédentes, dans lequel
la première encoche (37) est disposée sur un côté latéral extérieur d'un centre de la partie de repose-pied de pédale (25) dans la direction gauche-droite du véhicule (1).

5. Le véhicule à selle selon l'une quelconque des revendications précédentes, dans lequel
la première encoche (37) présente une forme incurvée.
